## Europäisches Patentamt

## European Patent Office

## Office européen des brevets

(11) Veröffentlichungsnummer: **0 377 868**
**A2**

(12) **EUROPÄISCHE PATENTANMELDUNG**

(21) Anmeldenummer: 89123438.7

(22) Anmeldetag: 19.12.89

(51) Int. Cl.5: **C08K 5/3492, C08K 3/00, C08K 5/00, C08G 18/40, C08G 18/50,** //(C08G18/40, 101:00)

(30) Priorität: 28.12.88 DE 3844048

(43) Veröffentlichungstag der Anmeldung:
18.07.90 Patentblatt 90/29

(84) Benannte Vertragsstaaten:
AT BE CH DE ES FR GB GR IT LI NL SE

(71) Anmelder: BASF Aktiengesellschaft
Carl-Bosch-Strasse 38
D-6700 Ludwigshafen(DE)

(72) Erfinder: Genz, Manfred, Dr.
Neuwiesenstrasse 2
D-6700 Ludwigshafen(DE)
Erfinder: Leppkes, Reinhard, Dr.
Eschkopfstrasse 2

D-6712 Bobenheim-Roxheim(DE)
Erfinder: Reich, Erhard, Dr.
Heinrich-Strasse 11
D-2845 Damme(DE)
Erfinder: Schoenleben, Willibald, Dr.
Blumenthalstrasse 41
D-6900 Heidelberg(DE)
Erfinder: Hettinger, Peter, Dr.
Sievertstrasse 4
D-6802 Ladenburg(DE)
Erfinder: Lutter, Heinz-Dieter, Dr.
Adalbert-Stifter-Strasse 3
D-6903 Neckargemuend(DE)
Erfinder: Ramlow, Gerhard, Dr.
Wintergasse 121
D-6940 Weinheim(DE)

(54) **Verfahren zur Herstellung von flammwidrigen, elastischen Polyurethan-Weichschaumstoffen unter Mitverwendung mindestens eines Polyoxyalkylenpolyamins und Melamin.**

(57) Gegenstand der Erfindung ist ein Verfahren zur Herstellung von flammwidrigen, elastischen Polyurethan-Weichschaumstoffen durch Umsetzung von

a) organischen und/oder modifizierten organischen Polyisocyanaten, mit

b) höhermolekularen Verbindungen mit mindestens zwei reaktiven Wasserstoffatomen und

c) gegebenenfalls niedermolekularen Kettenverlängerungsmitteln

in Gegenwart von

d) Katalysatoren,

e) Treibmitteln,

f) Flammschutzmitteln

sowie gegebenenfalls

g) Hilfsmitteln und/oder Zusatzstoffen,

wobei verwendet werden: als Ausgangskomponente (b) eine Mischung mit einer durchschnittlichen Funktionalität von 2 bis 4 und einem durchschnittlichen Molekulargewicht von 2200 bis 8000, die vorzugsweise enthält:

bi) 40 bis 94 Gew.-Teile mindestens eines Polyoxyalkylen-polyols mit einer Funktionalität von 2 bis 4 und einem durchschnittlichen Molekulargewicht von 250 bis 8000,

bii) 3 bis 25 Gew.-Teile mindestens eines polymermodifizierten Polyoxyalkylen-polyols mit einer Funktionalität von durchschnittlich 2 bis 4 und einem durchschnittlichen Molekulargewicht von 1200 bis 8000, ausgewählt aus der Gruppe der Pfropf-polyoxyalkylen-polyole, der Polyharnstoff-, Polyhydrazid- und/oder tert. Aminogruppen gebunden enthaltenden Polyurethan-Polyalkylen-polyolen und

biii) 3 bis 35 Gew.-Teile mindestens eines Polyoxyalkylen-polyamins mit einer Funktionalität von 2

EP 0 377 868 A2

bis 4 und einem durchschnittlichen Molekulargewicht von 1800 bis 8000 und als Flammschutzmittel (f) Melamin oder Mischungen aus Melamin und anderen Flammschutzmitteln.

## Verfahren zur Herstellung von flammwidrigen, elastischen Polyurethan-Weichschaumstoffen unter Mitverwendung mindestens eines Polyoxyalkylenpolyamins und Melamin

Die Herstellung von elastischen Polyurethan (PU)-Weichschaumstoffen ist bekannt und wird in zahlreichen Patent- und Literaturpublikationen beschrieben. Beispielhaft genannt seien das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, herausgegeben von Dr. G. Oertel sowie die Monographie "Integralschaumstoffe" von Dr. H. Piechota und Dr. H. Röhr, 1975, herausgegeben vom gleichen Verlag.

Zur Herstellung von PU-Weichschaumstoffen werden üblicherweise als Polyisocyanate handelsübliche Toluylen-diisocyanate, als polyfunktionelle höhermolekulare Verbindungen Polyoxyalkylen-polyole auf der Grundlage von 1,2-Propylenoxid und/oder Ethylenoxid sowie Mischungen aus derartigen Polyoxyalkylenpolyolen und Pfropf-polyoxyalkylen-polyolen und als Kettenverlängerungsmittel Alkandiol oder hydroxyl- und/oder aminogruppenhaltige Verbindungen mit einer Funktionalität größer als 2, wie z.B. Glycerin, Trimethylolpropan oder Alkanolamine verwendet.

Derartige PU-Weichschaumstoffe sind nicht flammwidrig; nachteilig ist insbesondere ihre leichte Entflammbarkeit. Zur Verminderung dieses Nachteils werden den schaumfähigen PU-Mischungen Flammschutzmittel, vorzugsweise halogen- und/oder phosphorhaltige Verbindungen, einverleibt. Der Zusatz dieser Produkte wirkt sich jedoch vielfach negativ auf die mechanischen Eigenschaften der erhaltenen PU-Schaumstoffe aus. Es hat daher nicht an Versuchen gefehlt, neue Flammschutzmittel zu entwickeln und die halogen- und/oder phosphorhaltigen Verbindungen ganz oder zumindest teilweise in PU-Schaumstoffen durch diese zu ersetzen.

Als hierfür geeignete Verbindung wird beispielsweise das bei $354^\circ$ C schmelzende, polyfunktionelle Melamin genannt. Nach Angaben der DE-A-23 48 838 wird das Melamin in der Polyol- und/oder der Polyisocyanatkomponente suspendiert und die erhaltene Suspension sofort zu isocyanuratgruppenhaltigen, flammfesten PU-Kunststoffen verarbeitet. Nichtentflammbare PU-Hartschaumstoffe werden gemäß US-A-4 221 875 (DE-A-28 09 084) durch Umsetzung von organischen Polyisocyanaten und Polyoxyalkylen-polyolen in Gegenwart von Treibmitteln und Silikonen als oberflächenaktiver Zusatzstoff sowie 20 bis 100 Gew.-Teilen Melamin als Flammschutzmittel pro 100 Gew.-Teilen Polyoxyalkylen-polyol erhalten.

Die EP-A-0 004 618 (US-A-4 258 141) beschreibt ein Verfahren zur Herstellung von schwerentflammbaren PU-Weichschaumstoffen unter Verwendung einer Mischung aus Diphenylmethan-diisocyanaten und Polyphenyl-polymethylen-polyisocyanaten (Roh-MDI) mit einem Gehalt an Diphenylmethan-diisocyanat-Isomeren von 40 bis 90 Gew.%, bezogen auf das Gesamtgewicht, als Polyisocyanate und Cyansäurederivate, insbesondere Melamin, als Flammschutzmittel.

Obwohl nach diesen Verfahren die Flammwidrigkeit der PU-Schaumstoffe bedeutend verbessert werden konnte, muß auch hier die starke Sedimentation des Melamins im Polyol, die bereits nach kurzer Lagerzeit auftritt, als nachteilig angesehen werden. Zur Überwindung dieses Nachteils werden in der EP-B-023 987 (US-A-4 293 657) stabile Melamin-Polyol-Dispersionen beschrieben, bei denen das Melamin in situ in dem Polyol in Gegenwart mindestens eines Stabilisators mit einer örtlichen Energiedichte von 10 bis 3000 $kW/m^3$ auf eine Teilchengröße von kleiner als 10 $\mu$m zerkleinert wird. Diese zusätzliche Verfahrensmaßnahme ist apparativ aufwendig und kostenintensiv.

Es wurde außerdem versucht durch geeignete Zusatzstoffe die Verarbeitbarkeit von Melamin enthaltenden PU-Formulierungen zu verbessern, ohne die Flammwidrigkeit der erhaltenen Schaumstoffe zu reduzieren. Nach Angaben der DE-A-35 30 519 (GB-A-21 63 762A) wird als flammhemmendes Additiv eine Mischung aus Melamin und einem Additionsprodukt aus Alkanolamin und Isocyanat, die in einem Polyol dispergiert wird, verwendet. Die GB-A-21 77 405A und 21 77 406A beschriebenen Mischungen aus Melamin und Styrol-Acrylnitril-Pfropf-polyoxypropylen-polyoxyethylen-polyolen, dispergiert in üblichen Polyoxypropylen-polyoxyethylen-polyolen, sowie gegebenenfalls phospor- und/oder halogenhaltigen Verbindungen als Flammschutzadditiv. Nach diesen Verfahren hergestellte Schaumstoffe zeigen zwar eine gute Flammbeständigkeit, ihre mechanischen Eigenschaften genügen jedoch vielfach nicht den gestellten Anforderungen. Nachteilig ist ferner, daß die Formulierungen in Mehrkomponenten-Mischvorrichtungen verarbeitet werden müssen, da die Melamin enthaltende Komponente nicht ausreichend lagerstabil ist.

Die Aufgabe der vorliegenden Erfindung bestand darin, flammwidrige elastische PU-Schaumstoffe, vorzugsweise Formschaumstoffe, mit guten mechanischen Eigenschaften unter Verwendung von Melamin als Flammschutzmittel, insbesondere nach dem Zweikomponenten-Verfahren, herzustellen. Hierzu sollten die bekannten Verfahren zumindest verbessert und zur Erzielung von lagerbeständigen Ausgangsmischungen die Einsatzstoffe gegebenenfalls modifiziert werden.

Diese Aufgabe konnte überraschenderweise gelöst werden, durch die Verwendung einer Mischung aus Polyoxyalkylen-polyolen und -polyaminen als höhermolekulare Verbindungen mit mindestens zwei reaktiven Wasserstoffatomen in Verbindung mit Melamin oder Melamin enthaltenden Mischungen als Flammschutzmittel.

Gegenstand der Erfindung ist somit ein Verfahren zur Herstellung von flammwidrigen, elastischen PU-Weichschaumstoffen durch Umsetzung von

a) organischen Polyisocyanaten und/oder modifizierten organischen Polyisocyanaten mit NCO-Gehalten von 34 bis 2,8 Gew.%, bezogen auf das Gesamtgewicht, mit

b) höhermolekularen Verbindungen mit mindestens zwei reaktiven Wasserstoffatomen und

c) gegebenenfalls niedermolekularen Kettenverlängerungsmitteln

in Gegenwart von

d) Katalysatoren,

e) Treibmitteln,

f) Flammschutzmitteln

sowie gegebenenfalls

g) Hilfsmitteln und/oder Zusatzstoffen,

das dadurch gekennzeichnet ist, daß man verwendet

als Ausgangskomponente (b) eine Mischung mit einer Funktionalität von durchschnittlich 2 bis 4, vorzugsweise 2,0 bis 3 und einem durchschnittlichen Molekulargewicht von 2200 bis 8000, vorzugsweise von 3600 bis 6500, die enthält:

bi) mindestens ein Polyoxyalkylen-polyol, vorzugsweise mindestens ein Polyoxyalkylen-polyol mit einer Funktionalität von durchschnittlich 2 bis 4, insbesondere von 2,0 bis 2,4 und einem durchschnittlichen Molekulargewicht von 250 bis 8000, insbesondere von 3600 bis 6500,

bii) mindestens ein polymermodifiziertes Polyoxyalkylen-polyol, insbesondere mindestens ein Pfropf-polyoxyalkylen-polyol, mit einer Funktionalität von durchschnittlich 2 bis 4, insbesondere von 2 bis 3 und einem durchschnittlichen Molekulargewicht von 1200 bis 8000, insbesondere von 2200 bis 6500 und

biii) mindestens ein Polyoxyalkylen-polyamin, vorzugsweise mindestens ein Polyoxyalkylen-polyamin mit einer Funktionalität von durchschnittlich 2 bis 4, insbesondere von 2 bis 3 und einem durchschnittlichen Molekulargewicht von 1800 bis 8000, insbesondere von 2500 bis 6500 und als Flammschutzmittel (f) Melamin oder Mischungen aus Melamin und anderen Flammschutzmitteln.

Die erfindungsgemäß verwendbaren höhermolekularen Verbindungen (b) werden zweckmäßgerweise in solchen Mengen eingesetzt, daß 100 Gew.-Teile der Mischung enthalten:

40 bis 94 Gew.-Teile, vorzugsweise 60 bis 87 Gew.-Teile eines Polyoxyalkylen-polyols (bi) oder einer Polyoxyalkylen-polyolmischung,

3 bis 25 Gew.-Teile, vorzugsweise 3 bis 15 Gew.-Teilen eines polymermodifizierten Polyoxyalkylen-polyols (bii), vorzugsweise ausgewählt aus der Gruppe der Pfropf-polyoxyalkylenpolyole, der Polyharnstoff-, Polyhydrazid- oder tert. Aminogruppen gebunden enthaltenden Polyurethan-Polyoxyalkylen-polyol-Dispersionen oder Mischungen derartiger polymermodifizierter Polyole und

3 bis 35 Gew.-Teile, vorzugsweise 10 bis 25 Gew.-Teile eines Polyoxyalkylen-polyamins (biii) oder einer Polyoxyalkylen-polyaminmischung.

Erfindungswesentlich hierbei ist, daß die Ausgangskomponenten (bi) bis (biii) hinsichtlich des Molekulargewichts und der Menge so ausgewählt werden, daß die resultierende Mischung ein durchschnittliches Molekulargewicht von 2200 bis 8000 besitzt, d.h. sofern eine oder mehrere der Ausgangskomponenten (bi) bis (biii) im Molekulargewicht kleiner als 2200 besitzen, können diese nur in solchen Mengen und in Verbindung mit mindestens einer Ausgangskomponente (bi) bis (biii) mit einem Molekulargewicht größer als 2200 eingesetzt werden, daß die Ausgangskomponentenmischung (b) das genannte Merkmal erfüllt.

Überraschenderweise zeigte sich, daß die obengenannte Mischung aus den Komponenten (bi) bis (biii), die Katalysatoren (d), Treibmittel (e), das Melamin oder die melaminhaltigen Mischungen als Flammschutzmittel (f) sowie gegebenenfalls die niedermolekularen Kettenverlängerungsmittel (c), und die Hilfsmittel und/oder Zusatzstoffe (g) zu einer lagerbeständigen Mischung, der sogenannten A-Komponente, vereinigt werden können, die auch nach 6-monatiger Lagerung bei Raumtemperatur praktisch noch kein Melaminsediment aufweist. Die A-Komponente ist auf üblichen Hochdruckmaschinen sehr gut verarbeitbar, da ihre Viskosität überraschenderweise mit steigendem Druck abnimmt, d.h. die A-Komponente thixotrop ist. Nach dem erfindungsgemäßen Verfahren hergestellte PU-Weichschaumstoffe, insbesondere Formschaumstoffe, sind sehr gut flammwidrig und zeichnen sich durch ein hohes mechanisches Eigenschaftsniveau aus. Bemerkenswert sind ferner das rasche Durchziehvermögen der Reaktionsmischung und die hohe Anfangsfestigkeit (greenstrength) der erhaltenen PU-Weichschaumstoff-Formkörper, die bereits nach kurzen Formstandzeiten entformt werden können und sehr gut entformbar sind, so daß die Formkörper rationell technisch hergestellt werden können.

Zu den für das erfindungsgemäße Verfahren verwendbaren Ausgangskomponenten ist folgendes auszuführen:

a) Zur Herstellung der flammwidrigen, elastischen PU-Weichschaumstoffe, vorzugsweise der PU-Weichformschaumstoffe eignen sich die bekannten organischen, z.B. aliphatischen, cycloaliphatischen, araliphatischen, cycloaliphatisch-aromatischen und vorzugsweise aromatischen Di-und/oder Polyisocyanate. Im einzelnen seien als aromatische Polyisocyanate beispielhaft genannt: Mischungen aus 4,4'- und 2,4'-Diphenylmethan-diisocyanaten (MDI), Mischungen aus MDI-Isomeren und Polyphenyl-polymethylen-polyisocyanaten, sogenanntes Roh-MDI, mit einem Gehalt an MDI-Isomeren von mindestens 50 Gew.%, vorzugsweise von 60 bis 90 Gew.% und mehr, bezogen auf das Gesamtgewicht der Mischung, 2,4- und 2,6-Toluylen-diisocyanat sowie die entsprechenden handelsüblichen Isomerenmischungen, Mischungen aus Toluylen-diisocyanaten und MDI und/oder Roh-MDI, beispielsweise solchen mit einem MDI-Gehalt von 30 bis 90 Gew.%, vorzugsweise 40 bis 80 Gew.%, bezogen auf das Gesamtgewicht des Roh-MDI's.

Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.%, vorzugsweise von 12 bis 3,5 Gew.% oder Quasiprepolymere mit einem NCO-Gehalt von 35 bis 14 Gew.%, vorzugsweise von 34 bis 22 Gew.%, wobei mit Urethangruppen modifizierte Polyisocyanate aus Toluylen-diisocyanaten, insbesondere einem NCO-Gehalt von 34 bis 28 Gew.% und solche aus 4,4'-MDI, 4,4'- und 2,4'-MDI-Isomerenmischungen oder Roh-MDI, insbesondere einen NCO-Gehalt von 28 bis 22 Gew.%, bezogen auf das Gesamtgewicht, aufweisen und hergestellt werden durch Umsetzung von Diolen, Oxalkylen-glykolen und/oder Polyoxyalkylenglykolen mit Molekulargewichten von 62 bis 6000, vorzugsweise von 134,18 bis 4200 mit Toluylen-diisocyanaten, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylenglykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder Toluylen-diisocyanat-Basis.

Besonders bewährt haben sich jedoch und daher vorzugsweise Anwendung finden Toluylen-diisocyanat-2,4, Toluylen-diisocyanat-2,6, Mischungen aus Toluylen-diisocyanat-2,4 und -2,6 und Urethangruppen enthaltende Polyisocyanate mit einem NCO-Gehalt von 34 bis 28 Gew.%, besonders bevorzugt 34 bis 30 Gew.%, hergestellt aus 2,4- und 2,6-Toluylen-diisocyanat-Gemischen, zweckmäßigerweise im Gewichtsverhältnis von 80:20, und Polyoxypropylen-polyoxyethylen-glykolen mit einem Molekulargewicht von 2800 bis 4200.

b) Zur Erzielung lagerbeständiger, melaminhaltiger A-Komponenten ist, wie bereits dargelegt wurde, erfindungswesentlich, daß die Mischung aus den höhermolekularen Verbindungen mit reaktiven Wasserstoffatomen (b) eine durchschnittliche Funktionalität von 2 bis 4 und ein durchschnittliches Molekulargewicht von 2200 bis 8000 besitzt und enthält:

bi) mindestens ein Polyoxyalkylen-polyol,

bii) mindestens ein polymermodifiziertess Polyoxyalkylen-polyol und

biii) mindestens ein Polyoxyalkylenpolyamin

bi) Hierfür geeignete Polyoxyalkylen-polyole (bi) mit einer Funktionalität von durchschnittlich 2 bis 4, insbesondere 2,0 bis 2,4 und einem durchschnittlichen Molekulargewicht von 250 bis 8000, insbesondere von 3600 bis 6500, können nach bekannten Verfahren beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 bis 3, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und diakylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'-

und 2,2′-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.

Die Polyoxyalkylen-polyole können einzeln oder in Form von Mischungen verwendet werden, wobei solche Produkte bevorzugt sind, die sowohl Ethylenoxid- als auch 1,2-Propylenoxideinheiten in der Oxalkylenkette gebunden enthalten, wobei diese entweder statistisch oder blockweise angeordnet sein können. Insbesondere eingesetzt werden Polyoxypropylen-polyoxyethylen-polyole mit mehr als 50 % endständigen primären Hydroxylgruppen einer Funktionalität von 2 bis 3 und einem Molekulargewicht von 3600 bis 6500, Polyoxytetramethylen-glykole, zweckmäßigerweise solchen mit Molekulargewichten von 250 bis 3000, vorzugsweise 800 bis 2200 oder Mischungen aus den genannten Polyolen.

bii) Als polymermodifizierte Polyoxyalkylen-polyole (bii) mit einer durchschnittlichen Funktionalität von vorzugsweise 2 bis 4, insbesondere von 2 bis 3 und einem durchschnittlichen Molekulargewicht von vorzugsweise 1200 bis 8000, insbesondere von 2200 bis 6500 finden bevorzugt Pfropf-polyoxyalkylen-polyole Verwendung. Diese können hergestellt werden durch in situ Polymerisation von olefinisch ungesättigten Monomeren oder -gemischen, wie z.B. Styrol, Acrylnitril oder vorzugsweise Styrol-Acrylnitrilmischungen, in Polyoxyalkylen-polyolen, z.B. den oben beschriebenen Polyoxyalkylen-polyolen, analog den Angaben der deutschen Patentschriften Nrs. 11 11 394, 12 22 669 (US 3 304 273, 3 383 351, 3 523 093), 11 52 536 (GB 1 040 452) und 11 52 537 (GB 987 618) oder durch Dispergieren von Pfropf-polymeren, die zuvor durch radikalische Polymerisation in Lösungsmitteln hergestellt wurden, in Polyoxyalkylen-polyolen analog den Angaben der US-Patentschriften 3 391 092, 4 014 846, 4 093 573. Zur Herstellung der Pfropf-polyoxyalkylen-polyole eignen sich sowohl die obengenannten gesättigten Polyoxyalkylen-polyole, die gemäß US Reissue Patent Nr. 28 715 im wesentlichen frei sind von ethylenisch ungesättigten Einheiten als auch olefinisch ungesättigte Polyoxyalkylen-polyole wie sie z.B. in der US Patentschrift 3 652 659 und im US Reissue Patent 29 014 beschrieben werden. Als polymermodifizierte Polyoxyalkylen-polyole eignen sich ferner Polyharnstoff-, Polyhydrazid- oder tert. Aminogruppen gebunden enthaltende Polyurethan-Polyoxyalkylen-polyol-Dispersionen, wie sie beispielsweise beschrieben werden in der EP-B-0 011 752 (US 4 304 708), US-A-4 374 209 und DE-A-32 31 497. Die polymermodifizierten Polyoxyalkylen-polyole (bii), die zweckmäßigerweise 2 bis 35 Gew.%, vorzugsweise 3 bis 25 Gew.%, bezogen auf das Gesamtgewicht, Polymerpartikel besitzen, können ebenso wie die Polyoxyalkylen-polyole (bi) und die Polyoxyalkylen-polyaminde (biii) einzeln oder in Form von Mischungen verwendet werden.

biii) Als Polyoxyalkylen-polyamine (biii), vorzugsweise mit einer Funktionalität von durchschnittlich 2 bis 4, insbesondere von 2 bis 3 und einem durchschnittlichen Molekulargewicht von vorzugsweise 1800 bis 8000, insbesondere von 2500 bis 6500 kommen zweckmäßigerweise solche in Betracht, deren Aminogruppen an aliphatische Reste gebunden sind und die zu mindestens 70 %, vorzugsweise zu mehr als 90% aus primären Aminogruppen bestehen. Anstelle von Mischungen aus Polyoxyalkylen-polyolen (bi) und Polyoxyalkylen-polyaminen (biii) oder in Verbindung mit einer dieser Komponenten (bi) oder (biii) können gegebenenfalls auch partiell aminierte Polyoxyalkylen-polyole eingesetzt werden mit der Maßgabe, daß die Summe der Kenndaten der Einzelkomponenten die erfindungswesentlichen Merkmale der Mischung aus (bi) bis (biii) erfüllen.

Die erfindungsgemäß vorzugsweise zur Anwendung kommenden Polyoxyalkylen-polyamine mit an aliphatische Reste gebundenen Aminogruppen können nach bekannten Verfahren, beispielsweise durch Cyanoalkylierung der beschriebenen Polyoxyalkylen-polyole und anschließende Hydrierung des gebildeten Nitrils (US 3 257 050) oder durch Aminierung von Polyoxyalkylen-polyolen mit Ammoniak in Gegenwart von Wasserstoff und Katalysatoren (DE-A-12 15 373) hergestellt werden.

c) Gegebenenfalls kann es zur Modifikation der mechanischen Eigenschaften der flammwidrigen, elastischen PU-Weichschaumstoffe, insbesondere Weichformschaumstoffe, zweckmäßig sein, neben der erfindungsgemäß erforderlichen Mischung (b) aus den Komponenten (bi) bis (biii) zu ihrer Herstellung zusätzlich niedermolekulare Kettenverlängerungsmittel (c) mitzuverwenden. Als derartige Mittel kommen polyfunktionelle, insbesondere di- und trifunktionelle Verbindungen mit Molekulargewichten von 17 bis ungefähr 400, vorzugsweise von 62 bis ungefähr 300 in Betracht. Verwendet werden beispielsweise Di- und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen wie z.B. 1,2-Ethan-, 1,4-Butan-, 1,6-Hexandiamin, 2,4-und/oder 2,6-Toluylen-diamin, 4,4′-Diaminodiphenylmethan, 3,3′-di-und/oder 3,3′,5,5′-tetraalkyl-substituierten 4,4′-Diamino-diphenylmethanen als Startermolekülen und Alkylenoxid oder -gemischen.

Als Kettenverlängerungsmittel (c) vorzugsweise eingesetzt werden Dialkanolamine, Diole und/oder Triole und insbesondere Hexandiol-1,6, Diethanolamin, Trimethylolpropan und Glycerin oder Mischungen davon.

Die Kettenverlängerungsmittel, die vorzugsweise zur Herstellung der PU-Weichschaumstoffe mitverwendet werden, kommen zweckmäßigerweise in solchen Gewichtsmengen zur Anwendung, daß pro Mol höhermolekularer Verbindung (b) 0,01 bis 8 Mole, insbesondere 0,1 bis 3 Mole Kettenverlängerungsmittel (c) in der Reaktionsmischung vorliegen.

d) Zur Beschleunigung der Umsetzung zwischen der Mischung (b) aus den höhermolekularen Verbindungen (bi) bis (biii), Wasser als Treibmittel (e) und gegebenenfalls Kettenverlängerungsmittel (c) und den organischen Polyisocyanaten und/oder modifizierten Polyisocyanaten (a) werden der Reaktionsmischung übliche Polyurethankatalysatoren ein verleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N′N′-Tetramethyldiamino-diethylether, Bis-(dimethylaminopropyl)-harnstoff, N-Methyl-bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, N,N′,N″-Tris-(dialkylaminoalkyl)-hexahydrotriazin, z.B. N,N′,N″-Tris-(dimethylaminopropyl)-s-hexahydrotriazin und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.%, vorzugsweise 0,3 bis 3 Gew.% Katalysator auf Basis tertiärer Amine und/oder 0,01 bis 0,5 Gew.% vorzugsweise 0,03 bis 0,25 Gew.% Metallsalze, bezogen auf das Gewicht der Mischung der Ausgangsstoffe (bi bis biii).

e) Zu Treibmitteln (e), welche zur Herstellung der PU-Weichschaumstoffe verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 5 Gew.-Teile, vorzugsweise 1,0 bis 3,5 Gew.-Teile und insbesondere 2,5 bis 3,0 Gew.-Teile, bezogen auf 100 Gew.-Teile der Mischung (b) aus den Komponenten (bi) bis (biii).

Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile der Mischung (b) aus den Komponenten (bi) bis (biii). Gegebenenfalls kann es zweckmäßig sein, die gegebenenfalls modifizierten Polyisocyanate (a) mit dem physikalisch wirkenden Treibmittel zu mischen und dadurch die Viskosität zu verringern.

f) Als Flammschutzmittel (f) wird erfindungsgemäß Melamin verwendet, das in handelsüblicher Form angewandt werden kann und üblicherweise eine durchschnittliche Korngröße von 5 bis 50 μm und folgende Korngrößenverteilung aufweist

10 Gew.% der Teilchen sind größer als 30 μm
30 Gew.% der Teilchen sind größer als 24 μm
50 Gew.% der Teilchen sind größer als 20 μm
70 Gew.% der Teilchen sind größer als 16 μm
90 Gew.% der Teilchen sind größer als 11 μm.

Besonders bewährt hat sich und daher vorzugsweise eingesetzt wird Melamin mit einer durchschnittlichen Korngröße von 20 bis 50 μm und einem Schüttgewicht von 300 bis 800 g/Liter, insbesondere von 500 bis 650 g/Liter. Das Melamin kommt zweckmäßigerweise in einer Menge von 5 bis 130 Gew.-Teilen und insbesondere von 70 bis 100 Gew.-Teilen pro 100 Gew.-Teilen der Mischung (b) aus den Komponenten (bi) bis (biii) zur Anwendung.

Zweckmäßigerweise wird ausschließlich Melamin als Flammschutzmittel verwendet. Es kann jedoch auch vorteilhaft sein zur Erzielung spezieller Effekte, wie z.B. Homogenisierung und Stabilisierung der

EP 0 377 868 A2

Ausgangskomponentengemische, Reduzierung der Rauchentwicklung im Brandfalle, gezielte Verbesserung von mechanischen Eigenschaften der hergestellten PU-Schaumstoffe u.a. das Melamin mit anderen organischen oder anorganischen Flammschutzmittel zu kombinieren, so daß diese in reduzierten Mengen eingesetzt werden können. Als besonders geeignet zur Verbesserung der Flammwidrigkeit erweisen sich Mischungen von Flammschutzmitteln (f), die enthalten:

f1) 70 bis 100 Gew.-Teile Melamin,

f2) 0 bis 30 Gew.-Teile, vorzugsweise 3 bis 15 Gew.-Teile Stärke, zweckmäßigerweise ausgewählt aus der Gruppe der Mais-, Reis-, Kartoffel- oder Weizenstärke oder Mischungen davon sowie gegebenenfalls chemisch modifizierter Stärkederivate und

f3) 0 bis 30 Gew.-Teilen, vorzugsweise 3 bis 15 Gew.-Teilen mindestens eines zusätzlichen Flammschutzmittels aus der Gruppe Trikresylphosphat, Tris-(2-chlorethyl)-phosphat, Tris-(2-chlorpropyl)-phosphat, Tris-(1,3-dichlorpropyl)-phosphat, Tris-(2,3-dibrompropyl)-phosphat, Tetrakis-(2-chlorethyl)-ethylendiphosphat, Aluminiumoxidhydrat, Ammoniumsulfat, der Ammoniumphosphate und Ammoniumpolyphosphate, wobei die Gew.-Teile jeweils bezogen sind auf 100 Gew.-Teile der Mischung (b) der höhermolekularen Verbindungen (bi) bis (biii).

Bewährt haben sich ferner Mischungen von Flammschutzmitteln (f), die enthalten

f1) 70 bis 100 Gew.-Teile Melamin und

f2) 3 bis 30 Gew.-Teile mindestens einer der vorgenannten Stärken oder der entsprechenden Stärkederivate oder

f3) 1 bis 30 Gew.-Teile Ammoniumpolyphoshat, wobei die Gewichtsteile bezogen sind auf 100 Gew.-Teile der Mischung (b) der höhermolekularen Verbindungen (bi) bis (biii).

Als Ammoniumpolyphosphat findet insbesondere eine feinkörnige, schwerlösliche, modifizierte Form mit der allgemeinen Formel

$$H_{(n-m)+2} (NH_4)_m P_n O_{3n+1}$$

Verwendung, in der n eine ganze Zahl mit einem Durchschnittswert von etwa 20 bis 800, vorzugsweise ungefähr 700 bedeutet und das Verhältnis von m zu n etwa 1 beträgt und das modifizierte Ammoniumpolyphosphat besteht aus etwa 80 bis 99,5 Masse% Ammoniumpolyphosphat und etwa 0,5 bis 20 Masse% eines gehärteten Epoxidharzes mit einem Epoxid-Äquivalentgewicht von etwa 170 bis etwa 220, das die einzelnen Ammoniumpolyphosphatpartikelchen umhüllt. Derartige Ammoniumpolyphosphate können beispielsweise bezogen werden von der Hoechst Aktiengesellschaft under dem Warenzeichen Exolit®.

g) Der Reaktionsmischung können auch noch Hilfsmittel und/oder Zusatzstoffe (g) einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe.

In Betracht, kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl-bzw. Rizinolsäureester und Türkischrotöl, die in Mengen von 0,05 bis 5, vorzugsweise 0,1 bis 2 Gew.-Teilen pro 100 Gew.-Teilen der Mischung (b) aus den Ausgangskomponenten (bi) bis (biii) angewandt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der PU-Weichschaumstoffe werden die organischen, gegebenenfalls modifizierten Polyisocyanate (a), die höhermolekularen Verbindungen mit mindestens zwei reaktiven Wasserstoffatomen (b) und gegebenenfalls Kettenverlängerungsmittel (c) in Gegenwart von Katalysatoren (d), Treibmitteln (e), Flammschutzmittel (f) und gegebenenfalls Hilfsmitteln und/oder Zusatzstoffen (g) bei Temperaturen von 0 bis 100 °C, vorzugsweise 15 bis 80 °C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (b) und gegebenenfalls (c) vorliegen.

Die PU-Weichschaumstoffe werden zweckmäßigerweise nach dem one shot-Verfahren durch Vermischen von zwei Komponenten A und B hergestellt, wobei die Ausgangskomponenten (b), (d), (e), (f) und gegebenenfalls (c) und (g) zu der sogenannten A-Komponente vereinigt und als B-Komponente die Ausgangskomponente (a) gegebenenfalls im Gemisch mit (f), (g) und inerten, physikalisch wirkenden Treibmitteln verwendet werden. Da die A-Komponente mindestens 6 Monate lagerstabil ist, müssen die A- und B-Komponente vor Herstellung der PU-Weichschaumstoffe nur noch intensiv gemischt werden. Die Reaktionsmischung kann in offenen oder geschlossenen Formwerkzeugen verschäumt werden; sie eignet

8

sich ferner zur Herstellung von Blockschaumstoffen.

Wie bereits dargelegt wurde, findet das erfindungsgemäße Verfahren vorzugsweise Anwendung zur Herstellung von PU-Weichformschaumstoffen. Die Reaktionsmischung wird hierzu mit einer Temperatur von 15 bis 80°C, vor zugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die nach dem erfindungsgemäßen Verfahren hergestellten PU-Weichschaumstoffe besitzen Dichten von 35 bis 120 g/Liter, vorzugsweise 40 bis 80 g/Liter. Sie sind gut flammwidrig, wobei sie den Korrosinbrennertest (FAR 25.853(c)) bestehen und weisen ein gutes mechanisches Eigenschaftsniveau auf. Die Formschaumstoffe finden vorzugsweise Verwendung als Polsterelemente z.B. als Sitzpolster, Armlehnen, Kopfstützen, Sonnenblenden und Sicherheitsabdeckungen in Fahrzeugkabinen, vorzugsweise Kraftfahrzeugen und Flugzeugen, wobei insbesondere Flugzeugsitze mit Dichten von 35 bis 100 g/Liter hergestellt werden.

Die in den Beispielen genannten Teile beziehen sich auf das Gewicht.

Beispiel 1

A-Komponent:

Mischung aus
75 Teilen eines mit Glycerin gestarteten Polyoxypropylen-polyoxyethylen-polyols mit einem durchschnittlichen Molekulargewicht von 6000,
10 Teilen eines mit Trimethylolpropan gestarteten Pfropf-polyoxypropylen-polyoxyethylen-polyols mit einem durchschnittlichen Molekulargewicht von ungefähr 6000, und einem Pfropfpolymergehalt von 20 Gew.%, bezogen auf das Gesamtgewicht, hergestellt unter Verwendung einer Acrylnitril-Styrol-Mischung zur Pfropfung
20 Teilen eines Polyoxypropylen-polyoxyethylen-diamins mit einem durchschnittlichen Molekulargewicht von ungefähr 3900, hergestellt durch Aminierung eines mit Dipropylenglykol gestarteten Polyoxypropylen-polyoxyethylen-glykols,
1,2 Teilen Silicon-Stabilisator (Silicon DC 5043 der Firma Dow Corning)
2,4 Teilen Wasser
10,0 Teilen Trichlorfluormethan,
0,42 Teilen einer 33 gew.%igen Lösung von Triethylendiamin in Dipropylenglykol,
0,2 Teilen 2-(Dimethylaminoethoxy)ethanol,
0,12 Teilen Bis-(dimethylaminoethyl)ether, 1,0 Teilen Diethanolamin und
100,0 Teilen Melamin

B-Komponente:

Mischung aus
95 Teilen eines Urethangruppen enthaltenden Quasiprepolymers mit einem NCO-Gehalt von 31 Gew.% und einer Viskosität von 52 m•Pas bei 25°C, hergestellt aus einem 2,4-/2,6-Toluylendiisocyanat-Isomerengemisch im Gewichtsverhältnis 80:20 und einem Polyoxypropylen-polyoxyethylen-glykol mit einem Molekulargewicht von 3900 und
5 Teilen Trichlorethylphosphat.
100 Teile der A-Komponente und
22 Teile der B-Komponente wurden, entsprechend einem NCO-Index von 100, intensiv gemischt und die Reaktionsmischung mit einer Temperatur von 23°C in ein auf 50°C temperiertes metallisches Formwerkzeug mit der inneren Hohlraumform eines Flugzeugsitzes in einer solchen Menge eingebracht, daß sich im geschlossenen Formwerkzeug ein Verdichtungsgrad von 1,2 einstellt.

Das Formteil wurde nach 12 Minuten entformt und 24 Stunden bei Raumtemperatur gelagert.

An dem flammwidrigen Formkörper wurden folgende mechanische Eigenschaften gemessen:

| Raumgewicht [g/l]: | 65 |
| Zugfestigkeit nach DIN 53 571 [KPa]: | 70 |
| Dehnung nach DIN 53 571 [%]: | 75 |
| Weiterreißfestigkeit nach DIN 53 575 [N/mm]: | 0,36 |
| Druckverformungsrest nach DIN 53 572 [%]: | 6 |

Beispiel 2

A-Komponente:

analog Beispiel 1, mit der Änderung, daß anstelle des Melamins als Flammschutzmittel eine Mischung aus
85 Gew.-Teilen Melamin,
10 Gew.-Teilen Weizenstärke und
5 Gew.-Teilen Ammoniumpolyphosphat (Exolit® 422 der Firma Hoechst AG)
verwendet wurde.

B-Komponente:

Urethangruppen enthaltendes Quasiprepolymer mit einem NCO-Gehalt von 31 Gew.% und einer Viskosität von 52 mPas bei 25° C, hergestellt aus einem 2,4- und 2,6-Toluylen-diisocyanat-Isomerengemisch (Gewichtsverhältnis 80:20) und einem mit Dipropylenglykol gestarteten Polyoxypropylen-polyoxyethylen-glykol mit einem Molekulargewicht von 3900.

100 Gew.-Teile der A-Komponente und 21 Gew.-Teile der B-Komponente wurden analog den Angaben des Beispiels 1 zu einem flexiblen Polyurethan-Formschaumstoff umgesetzt.

Die mechanischen Eigenschaften des erhaltenen flexiblen, flammwidrigen Polyurethan-Formschaumstoffs entsprachen im wesentlichen dem nach Beispiel 1 erhaltenen Produkt.

Beispiel 3

A-Komponente:

analog Beispiel 1, wobei jedoch anstelle von Melamin als Flammschutzmittel eine Mischung aus
75 Gew.-Teilen Melamin und
25 Gew.-Teilen Ammoniumpolyphosphat (Exolit® 422 der Firma Hoechst AG)
verwendet wurde.

B-Komponente:

Urethangruppen enthaltendes Quasiprepolymer mit einem NCO-Gehalt von 31 Gew.%, hergestellt aus einem 2,4- und 2,6-Toluylen-diisocyanat-Isomerengemisch (Gewichtsverhältnis 80:20) und einem mit Trimethylolpropan gestarteten Polyoxypropylen-polyoxyethylen-polyol mit einem Molekulargewicht von 6200.

100 Gew.-Teile der A-Komponente und 21 Gew.-Teile der B-Komponente wurden analog den Angaben des Beispiels 1 zu einem flexiblen Polyurethan-Formschaumstoff umgesetzt.

An dem erhaltenen flammwidrigen Formkörper wurden folgende mechanische Eigenschaften gemessen:

| Raumgewicht [g/l]: | 70 |
|---|---|
| Zugfestigkeit nach DIN 53 571 [KPa]: | 70 |
| Dehnung nach DIN 53 571 [%]: | 70 |
| Weiterreißfestigkeit nach DIN 53 575 [N/mm]: | 0,4 |
| Druckverformungsrest nach DIN 53 572 [%]: | 7 |

Beispiel 4

A-Komponente:

analog Beispiel 1, wobei jedoch anstelle von Melamin als Flammschutzmittel eine Mischung aus
85 Gew.-Teilen Melamin und
15 Gew.-Teilen Kartoffelstärke
verwendet wurde.

B-Komponente:

Mischung aus 2,4- und 2,6-Toluylen-diisocyanat im Gewichtsverhältnis 80:20.

100 Gew.-Teile der A-Komponente und 15 Gew.-Teile der B-Komponente wurden analog den Angaben des Beispiels 1 zu einem flexiblen Polyurethan-Formschaumstoff umgesetzt.

An dem erhaltenen flammwidrigen Formkörper wurden folgende mechanische Eigenschaften gemessen:

| Raumgewicht [g/l]: | 75 |
|---|---|
| Zugfestigkeit nach DIN 53 571 [KPa]: | 68 |
| Dehnung nach DIN 53 571 [%]: | 75 |
| Weiterreißfestigkeit nach DIN 53 575 [N/mm]: | 0,35 |
| Druckverformungsrest nach DIN 53 572 [%]: | 7 |

Die gemäß Beispiele 1 bis 4 hergestellten Formkörper bestanden den Kerosinbrennertest (FAR 25.823 C) mit weniger als 10 % Gewichtsverlust und erfüllten somit die derzeit härteste Brandschutzanforderung an Polyurethan-Weichschaumstofte.

Durch den Einsatz der erfindungsgemäß geeigneten anderen Flammschutzmittel konnte der Melamingehalt reduziert und die Rauchgasdichte verringert werden.

**Ansprüche**

1. Verfahren zur Herstellung von flammwidrigen, elastischen Polyurethan-Weichschaumstoffen durch Umsetzung von
a) organischen Polyisocyanaten und/oder modifizierten organischen Polyisocyanaten mit
b) höhermolekularen Verbindungen mit mindestens zwei reaktiven Wasserstoffatomen und
c) gegebenenfalls niedermolekularen Kettenverlängerungsmitteln
in Gegenwart von
d) Katalysatoren,
e) Treibmitteln,
f) Flammschutzmitteln
sowie gegebenenfalls
g) Hilfsmitteln und/oder Zusatzstoffen,
dadurch gekennzeichnet, daß man verwendet

11

als Ausgangskomponente (b) eine Mischung mit einer durchschnittlichen Funktionalität von 2 bis 4 und einem durchschnittlichen Molekulargewicht von 2200 bis 8000, die enthält

bi) mindestens ein Polyoxyalkylen-polyol,

bii) mindestens ein polymermodifiziertes Polyoxyalkylen-polyol und

biii) mindestens ein Polyoxyalkylen-polyamin

und als Flammschutzmittel (f) Melamin oder Mischungen aus Melamin und anderen Flammschutzmitteln.

2. Verfahren nach Anspruch 1, dadurch gekennzeichnet, daß die Mischung der Ausgangskomponenten (b) enthält:

bi) mindestens ein Polyoxyalkylen-polyol mit einer Funktionalität von 2 bis 4 und einem durchschnittlichen Molekulargewicht von 250 bis 8000,

bii) mindestens ein polymermodifiziertes Polyoxyalkylen-polyol mit einer Funktionalität von 2 bis 4 und einem durchschnittlichen Molekulargewicht von 1200 bis 8000 ausgewählt aus der Gruppe der Pfropfpolyoxyalkylen-polyole, der Polyharnstoff-, Polyhydrazid- und/oder tert. Aminogruppen gebunden enthaltenden Polyurethan-polyoxyalkylen-polyol-Dispersionen und

biii) mindestens ein Polyoxyalkylen-polyamin mit einer Funktionalität von 2 bis 4 und einem durchschnittlichen Molekulargewicht von 1800 bis 8000.

3. Verfahren nach Anspruch 1, dadurch gekennzeichnet, daß die Mischung der Ausgangskomponenten (b), bezogen auf 100 Gew.-Teile enthält:

bi) 40 bis 94 Gew.-Teile mindestens eines Polyoxyalkylen-polyols mit einer Funktionalität von 2 bis 4 und einem durchschnittlichen Molekulargewicht von 250 bis 8000,

bii) 3 bis 25 Gew.-Teile mindestens eines polymermodifizierten Polyoxyalkylen-polyols mit einer Funktionalität von 2 bis 4 und einem durchschnittlichen Molekulargewicht von 1200 bis 8000 und

biii) 3 bis 35 Gew.-Teile mindestens eines Polyoxyalkylen-polyamins mit einer Funktionalität von 2 bis 4 und einem durchschnittlichen Molekulargewicht von 1800 bis 8000.

4. Verfahren nach Anspruch 1, dadurch gekennzeichnet, daß als Polyoxyalkylen-polyole (bi) für die Mischung der Ausgangskomponenten (b) verwendet werden:

Polyoxypropylen-polyoxyethylen-polyole mit mehr als 50 % endständigen primären Hydroxylgruppen, einer Funktionalität von 2 bis 3 und einem Molekulargewicht von 3600 bis 6500

Polyoxytetramethylen-glykole mit einem Molekulargewicht von 250 bis 3000 oder Mischungen aus den genannten Verbindungen.

5. Verfahren nach Anspruch 1, dadurch gekennzeichnet, daß als Flammschutzmittel (f) 5 bis 130 Gew.-Teile Melamin pro 100 Gew.-Teile der Mischung (b) der Ausgangskomponenten (bi) bis (biii) verwendet werden.

6. Verfahren nach Anspruch 1, dadurch gekennzeichnet, daß man als Flammschutzmittel (f) Mischungen verwendet aus

f1) 70 bis 100 Gew.-Teilen Melamin,

f2) 0 bis 30 Gew.-Teilen Stärke und

f3) 0 bis 30 Gew.-Teilen mindestens eine zusätzlichen Flammschutzmittels aus der Gruppe Trikresylphosphat, Tris-(2-chlorethyl)-phosphat, Tris-(2-chlorpropyl)-phosphat, Tris-(1,3-dichlorpropyl)-phosphat, Tris-(2,3-dibrompropyl)-phosphat, Tetrakis-(2-chlorethyl)-ethylendiphosphat, Aluminiumoxidhydrat, Ammoniumsulfat, der Ammoniumphosphate und Ammoniumpolyphosphate, wobei die Gewichtsteile jeweils bezogen sind auf 100 Gew.-Teile der Mischung (b) der höhermolekularen Verbindungen (bi) bis (biii).

7. Verfahren nach Anspruch 1, dadurch gekennzeichnet, daß man als Flammschutzmittel (f) Mischungen verwendet aus

f1) Melamin und

f3) modifiziertem Ammoniumpolyphospat, wobei das Ammoniumpolyphosphat die allgemeine Formel

$H_{(n-m)+2} (NH_4)_m P_n O_{3n+1}$

besitzt, in der n eine ganze Zahl mit einem Durchschnittswert von etwa 20 bis 800 bedeutet und das Verhältnis von m zu n etwa 1 beträgt und das modifizierte Ammoniumpolyphosphat besteht aus etwa 80 bis 99,5 Masse% Ammoniumpolyphosphat und etwa 0,5 bis 20 Masse% eines gehärteten Epoxidharzes mit einem Epoxid-Äquivalentgewicht von etwa 170 bis etwa 220, das die einzelnen Ammoniumpolyphosphatpartikelchen umhüllt.

8. Verfahren nach Anspruch 1, dadurch gekennzeichnet, daß man als Flammschutzmittel (f) Mischungen verwendet aus

f1) 70 bis 100 Gew.-Teilen Melamin und

f2) 3 bis 15 Gew.-Teilen Stärke und/oder

f3) 3 bis 15 Gew.-Teilen mindestens eine zusätzlichen Flammschutzmittels aus der Gruppe Trikresylphosphat, Tris-(2-chlorethyl)-phosphat, Tris-(2-chlorpropyl)-phosphat, Tris-(1,3-dichlorpropyl)-phosphat, Tris-

EP 0 377 868 A2

(2,3-dibrompropyl)-phosphat, Tetrakis-(2-chlorethyl)-ethylendiphosphat, Aluminiumoxidhydrat, Ammoniumsulfat, der Ammoniumphosphate und Ammoniumpolyphosphate, wobei die Gewichtsteile jeweils bezogen sind auf 100 Gew.-Teile der Mischung (b) der höhermolekularen Verbindungen (bi) bis (biii).

9. Verfahren nach Anspruch 1, dadurch gekennzeichnet, daß man als Flammschutzmittel (f) Mischungen verwendet aus
f1) 70 bis 100 Gew.-Teilen Melamin und
f3) 1 bis 30 Gew.-Teilen Ammoniumpolyphosphat,
wobei die Gew.-Teile jeweils bezogen sind auf 100 Gew.-Teile der Mischung (b) der höhermolekularen Verbindungen (bi) bis (biii).

10. Verfahren nach Anspruch 1, dadurch gekennzeichnet, daß man als Flammschutzmittel (f) Mischungen verwendet aus
f1) 70 bis 100 Gew.-Teilen Melamin und
f2) 3 bis 30 Gew.-Teilen mindestens einer Stärke, ausgewählt aus der Gruppe der Mais-, Reis-, Kartoffel- und Weizenstärke,
wobei die Gewichtsteile jeweils bezogen sind auf 100 Gew.-Teile der Mischung (b) der höhermolekularen Verbindungen (bi) bis (biii).

13